# EUROPÄISCHE PATENTSCHRIFT

(11) **EP 1 337 421 B1**
(45) Veröffentlichungstag und Bekanntmachung des Hinweises auf die Patenterteilung: **06.10.2004**
(21) Anmeldenummer: 01994745.6
(22) Anmeldetag: 28.11.2001
(51) Int. Cl.: B60S 1/52

(54) **SCHEINWERFERREINIGUNGSEINRICHTUNG**
HEADLAMP CLEANING DEVICE
DISPOSITIF DE NETTOYAGE DE PHARE

(30) Priorität: 29.11.2000 DE 10059216
(43) Veröffentlichungstag der Anmeldung: 27.08.2003
(73) Patentinhaber: REHAU AG + Co, 95111 Rehau (DE)
(72) Erfinder: RUDLOF, Manfred, 95111 Rehau (DE); SCHEITERLEIN, Bernd, 95111 Rehau (DE)
(86) Internationale Anmeldenummer: PCT/EP2001/013881
(87) Internationale Veröffentlichungsnummer: WO 2002/043995

(56) Entgegenhaltungen:
- DE-A- 19 820 897
- DE-A- 19 847 474
- DE-A- 19 916 947
- DE-C- 3 518 685

## Beschreibung

Die Erfindung betrifft eine Scheinwerferreinigungseinrichtung für Fahrzeuge mit einer an einem Düsenträger angeordneten Düse, wobei der Düsenträger als Stange ausgebildet ist und mittels eines Stellantriebs, insbesondere eines Elektromotors, zwischen einer eingefahrenen Ruhestellung und einer ausgefahrenen Arbeitsstellung bewegbar ist, in der die Düse auf den Scheinwerfer gerichtet ist.

In der EP 0820911 A2 ist eine Scheinwerferreinigungsanlage beschrieben mit einer an einem Düsenträger angeordneten Düse, wobei der Düsenträger zwischen einer im Fahrzeug befindlichen Ruhestellung und einer im Bereich vor dem Scheinwerfer befindlichen Arbeitsstellung bewegbar ist. Diese Bewegung wird hierbei durch einen Elektromotor erzielt. Parallel zu der Bewegung des Düsenträgers wird im Betrieb eine Pumpe betätigt, um Reinigungsflüssigkeit aus einem Vorratsbehälter über Rohre in die ausgefahrene Düse zu pumpen. Folglich sind hier zwei voneinander unabhängige Einrichtungen, Verstelleinrichtung und Pumpe erforderlich, um die Scheinwerfereinrichtung in Betrieb zu setzen, die im Betrieb zeitlich über zusätzliche elektronische Schaltungen aufeinander abgestimmt werden müssen. Der Einsatz zweier notwendiger Einrichtungen erhöht hierbei die Kosten der Anlage, die Anlage erfordert einen erhöhten Platzbedarf und die Wartung der Gesamtanlage ist aufwendig.
Die EP 118 0459 A2 beschreibt eine Scheibenreinigungsanlage für Fahrzeugscheinwerfer mit einer eine Düse teleskopartig verstellbaren Stellvorrichtung und einem zylindrischen Gehäuse, wobei im Innern des Gehäuses Kolben angeordnet sind. Dabei wird die über eine Kolbenstange mit dem Kolben verbundene Düse gegen den Druck der Waschflüssigkeit von einer Ruhe- in eine Gebrauchsstellung bewegt, wobei der Waschmittelzufluss zur Düse hin durch ein Absperrventil in der Gebrauchsstellung freigegeben wird und der Kolbenstangenkanal zur Aufnahme der Waschflüssigkeit dient. Diese Konstruktion ist aufwendig und verwendet im Ventilraum Ventildichtungen, die durch mechanische Beanspruchung betrachtet über den zeitlichen Lebenszyklus eines Kraftfahrzeuges zu Ausfällen führen kann. Ferner ist in der DE 35 18 685 eine Scheinwerferreinigungseinrichtung beschrieben, die ebenfalls einen Düsenträger und eine darauf angeordnete Düse aufweist. Bei dieser Einrichtung wird die Bewegung des Düsenträgers aus der Ruhestellung in die Arbeitsstellung jedoch über einen durch eine Pumpe erzeugten Wasserdruck bewirkt. Die Pumpe dient hierbei einerseits zur Bereitstellung der Reinigungsflüssigkeit, andererseits wird durch die gepumpte Reinigungsflüssigkeit zunächst ein hoher Wasserdruck aufgebaut der zur Bewegung des Düsenträgers eingesetzt wird.
Erst wenn der Düsenträger die Arbeitsstellung erreicht hat, wird ein Überdruckventil geöffnet und die Reinigungsflüssigkeit auf den Scheinwerfer gespritzt.

Da bei dieser Ausführungsform beide Scheinwerfer gleichzeitig über eine einzige Pumpe mit Reinigungsflüssigkeit versorgt werden, ist der notwendige Druck sehr hoch, und die Pumpe muss entsprechend groß dimensioniert werden und ist entsprechend kostenintensiv. Die Pumpe benötigt einerseits viel Raum, d.h. der Raum der von der Pumpe eingenommen wird kann nicht mehr für den Wasservorratsbehälter genutzt werden, andererseits wird die Gestaltung der Scheinwerferreinigungsanlage wesentlich durch die Lage der Pumpe bestimmt. Ferner ist eine getrennte Betätigung der Reinigungsanlage für jeden einzelnen Scheinwerfer nicht möglich.

Darüber hinaus erfordern diese bekannten Anlagen den Einsatz von relativ teuren Schläuchen, die druckfest sein müssen. Die heutzutage eingesetzten fadenarmierten Schläuche sind relativ steif und teuer. Zu dem Kostenfaktor des Materials kommt die Tatsache hinzu, dass steife, fadenarmierte Schläuche im Fahrzeug schlecht zu verlegen sind, so dass entsprechend hohe Montagezeiten benötigt werden und die Kosten zusätzlich ansteigen.

Der Erfindung liegt die Aufgabe zugrunde, eine Scheinwerferreinigungseinrichtung bereitzustellen, welche einerseits kostengünstiger gefertigt werden kann, gleichzeitig leichter als die bekannten Einrichtungen ist.

Diese Aufgabe wird für eine Scheinwerferreinigungseinrichtung der bekannten Gattung durch das im kennzeichnenden Teil des Anspruchs 1 angegebene Merkmal gelöst.

Gemäß Anspruch 1 weist die Scheinwerferreinigungsanlage einen Druckkolben auf, der gegenüber dem Düsenträger streckenweise axial verschiebbar ist.

Das Herausspritzen der Reinigungsflüssigkeit wird bei der erfindungsgemäßen Scheinwerferreinigungsanlage durch Zusammenwirken des mit Reinigungsflüssigkeit gefüllten Düsenzylinders und des Druckkolbens erzielt. Folglich entfällt die im Stand der Technik bisher notwendige Pumpe, so dass einerseits ein wartungs- und kostenintensives Bauteil entfällt, gleichzeitig mehr Raum für den Vorratsbehälter der Reinigungsflüssigkeit zur Verfügung steht und andererseits die gesamte Reinigungsanlage leichter und kostengünstiger hergestellt werden kann. Da auf die Pumpe verzichtet wird, können ferner als Leitungen relativ billige unarmierte Schläuche eingesetzt werden. Einfache, billige und gut biegsames Schläuche lassen sich einfach und gut im Fahrzeug verlegen und ermöglichen den Einbau in den Motorraum zu einem relativ späten Zeitpunkt. Darüber hinaus ermöglicht die neue Scheinwerferreinigungsanlage ein getrenntes Reinigen jedes einzelnen Scheinwerfers, so dass bei Störung eines Bauteils wenigstens noch der zweite Scheinwerfer gereinigt wird, wohingegen bei den bekannten Anlagen das gesamte System ausfällt.

Gemäss einer besonders vorteilhaften Ausbildung der Scheinwerferreinigungseinrichtung ist vorgesehen, dass sich der Düsenträger endseitig durch den Düsenzylinder erstreckt, wobei der Druckkolben in Ruhestellung auf dem Düsenträger in dem von der Düse abgewandten Bereich des Düsenzylinders und in Arbeitsstellung in dem mittleren Bereich des Düsenzylinders angeordnet ist. Vorzugsweise befindet sich der Druckkolben hierbei in Ruhestellung an dem von der Düse abgewandten Ende des Düsenzylinders.

Auf diese Weise wird der gesamte Innenraum des Düsenzylinders zur Aufnahme der Reinigungsflüssigkeit genutzt, so dass bei gleichem Raumbedarf mehr Reinigungsflüssigkeit zur Verfügung steht.

Im Betrieb ist vorgesehen, dass während der Ausfahrbewegung des Düsenträgers durch gleichzeitige Bewegung des Druckkolbens ein Überdruck in dem Düsenzylinder und während der Einfahrbewegung des Düsenträgers durch gleichzeitige Bewegung des Druckkolbens ein Unterdruck in dem Düsenzylinder entsteht.

Die Wasserdruckänderung in dem Düsenzylinder wird einerseits eingesetzt, um die Reinigungsflüssigkeit aus der Düse zu spritzen, andererseits um den Düsenzylinder wieder mit Reinigungsflüssigkeit aufzufüllen. Die vorliegende Erfindung ermöglicht es folglich auf sehr einfache Weise auf den Einsatz einer Pumpe zu verzichten. Die gesamte Anlage ist einfacher aufgebaut und daher in der Herstellung und Wartung erheblich billiger als bekannte Anlagen. Ferner kann auf den Einsatz von Druckschläuchen zwischen Vorratsbehälter und Pumpe verzichtet werden.

Ferner hat es sich als vorteilhaft erwiesen, dass die Vorwärtsbewegung des Druckkolbens zeitverzögert zu der Bewegung des Düsenträgers erfolgt.

Bei dieser Ausführungsform wird die Reinigungsflüssigkeit erst herausgespritzt, wenn die Düse bereits herausgefahren ist, sich aber noch nicht in ihrer Endposition befindet. Da bereits während der Vorwärtsbewegung in die Arbeitsstellung Reinigungsflüssigkeit abgegeben wird, ist es möglich eine größere Fläche des Scheinwerfers zu reinigen.

Vorzugsweise erfolgt die Zeitverzögerung durch Vermittlung einer Feder, welche an ihrem einem Ende mit dem Düsenträger und an ihrem anderen Ende mit dem Druckkolben so verbunden ist, dass sich mit der Bewegung des Düsenträgers die Feder spannt und die gespannte Feder erst nach Erreichen eines bestimmten Weges den Druckkolben mitzieht.

Der Einsatz der Feder dient hierbei einerseits der Zeitverzögerung, gleichzeitig wird die Last am Antrieb des Kolbens bei beginnender Bewegung des Düsenträgers deutlich abgemindert und steigt erst allmählich an. Der gesamte Antrieb kann durch den Einsatz der Feder leichter und funktionssicher ausgelegt werden. Darüber hinaus liefert die Feder das Druckpolster für kontinuierliches Spritzen der Düsen, wenn der Düsenträger bereits weit ausgefahren ist und sich seiner Arbeitsstellung nähert.

Hierbei kann die Feder in einer Richtung als Druck- und in der anderen Richtung als Zugfeder ausgebildet sein, wobei sich die Feder in der Ruhestellung in der neutralen Mittelstellung befindet.

Die Feder stellt ein sehr einfaches und wirkungsvolles Mittel dar, eine Zeitverzögerung zwischen Beginn der Vorwärtsbewegung des Düsenträgers und Bewegung des Druckkolbens zu bewirken. Gleichzeitig kann nach wie vor der ganze Raum des Düsenzylinders zur Aufnahme von Reinigungsflüssigkeit genutzt werden.

Gemäß einer anderen Ausführungsform wird die Zeitverzögerung durch zwei Mitnehmeinrichtungen bewirkt, welche auf dem Düsenträger innerhalb des Düsenzylinders solchermaßen angeordnet sind, dass der Druckkolben in der Ruhestellung an einer ersten Mitnehmeinrichtung angeordnet ist, die sich in einem mittleren Bereich des Düsenträgers befindet und wobei eine zweite Mitnehmeinrichtung an dem der Düse abgewandten Ende des Düsenzylinders angeordnet ist, die den Druckkolben nach Erreichen eines vorbestimmten Weges mitzieht. Hierbei sind die Mitnehmeinrichtungen vorzugsweise als Vorsprünge an dem Düsenträger ausgebildet.

Auch diese Ausführungsform ermöglicht es mit sehr einfachen Mitteln eine Zeitverzögerung zwischen der Bewegung des Düsenträgers und der Bewegung des Druckkolbens zu bewirken.

Gemäss einer anderen Ausführungsform ist der Düsenzylinder mit einem Vorratsbehälter für Reinigungsflüssigkeit verbunden. Bei dieser Ausführungsform hat es sich bewährt, wenn zwischen dem Vorratsbehälter und dem Düsenzylinder ein Rückschlagventil angeordnet ist.

Es hat sich des weiteren als vorteilhaft erwiesen, wenn die Düse mit einem Überdruckventil versehen ist.

Dieses Merkmal bewirkt, dass die Reinigungsflüssigkeit erst aus der Düse herausspritzt, wenn ein vorgegebener Druck aufgebaut wurde. Hierdurch wird sichergestellt, dass der Druck mit weichem die Reinigungsflüssigkeit herausspritzt ausreicht, um den Scheinwerfer zu reinigen.

Ferner hat es sich als vorteilhaft erwiesen, wenn die Kolbenstange als Rohr ausgebildet ist und in dem innerhalb des Düsenzylinders angeordneten Bereich eine Öffnung aufweist, durch welche Reinigungsflüssigkeit aus dem Düsenzylinder durch den Düsenträger zu der Düse geleitet wird.

Die Ausbildung des Düsenträgers als Rohr vereinfacht den Anschluss der Düse, da diese nur noch auf das Rohr aufgesetzt werden muss.

Im folgenden werden bevorzugte Ausführungsformen der Erfindung sowie ihre Vorteile anhand von Zeichnungen näher erläutert. Es zeigt:
- Fig. 1: die Frontpartie eines Kraftfahrzeuges mit der erfindungsgemäßen Scheinwerferreinigungseinrichtung in Ruhestellung,
- Fig. 2-6: schematisch die Funktionsweise der erfindungsgemäßen Scheinwerferreinigungseinrichtung gemäss einer bevorzugten Ausführungsform und
- Fig. 7-11: schematisch die Funktionsweise der erfindungsgemäßen Scheinwerferreinigungseinrichtung gemäss einer weiteren bevorzugten Ausführungsform.

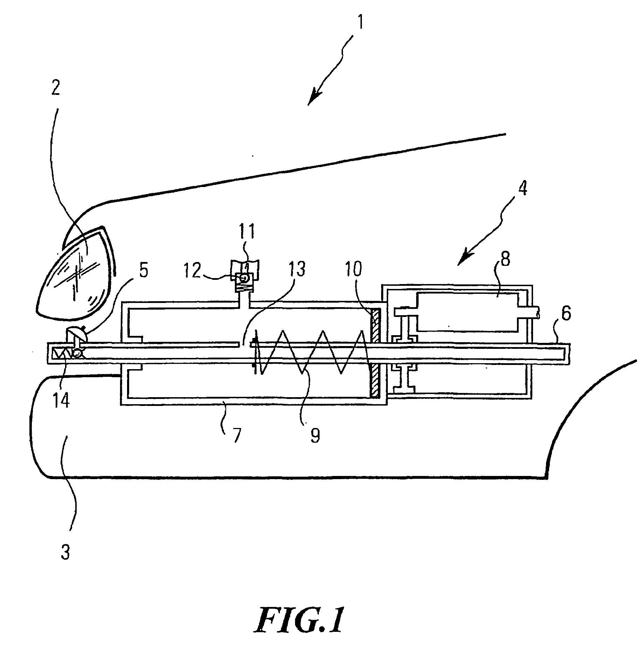

In Fig. 1 ist der vordere Teil eines Kraftfahrzeugs 1, insbesondere ein Scheinwerfer 2 und eine Stossstange 3 im seitlichen Schnitt dargestellt. Die erfindungsgemäße Scheinwerferreinigungseinrichtung 4 ist solchermaßen im Fahrzeug angeordnet, dass sich eine Düse 5 in Ruhestellung in dem zwischen dem Scheinwerfer 2 und der Stossstange 3 gebildeten Spalt befindet, so dass sie keinen nachteiligen Einfluss auf das Strömungsverhalten am Fahrzeug ausübt.

Die Scheinwerferreinigungseinrichtung 4 umfasst die Düse 5, welche auf einem als Kolbenstange 6 ausgebildeten Düsenträger angeordnet ist. In der dargestellten Ausführungsform ist die Kolbenstange 6 als Rohr ausgebildet. Die Kolbenstange 6 erstreckt sich endseitig durch einen Düsenzylinder 7 und ist über einen Elektromotor 8 solchermaßen bewegbar, dass die Kolbenstange einen vorbestimmten Weg durch den Düsenzylinder hindurchbewegt und der die Düse tragende Teil der Kolbenstange ausgefahren wird. Der Elektromotor ist zu diesem Zweck an dem von der Düse 5 abgewandten Ende des Düsenzylinders 7 angeordnet.

Der sich innerhalb des Düsenzylinders erstreckende Bereich der Kolbenstange 6 ist mit einer Feder 9 verbunden, wobei sich der Ansatzbereich der Feder 9 an der Kolbenstange 6 etwa in der Mitte des Düsenzylinders 7 befindet. In der dargestellten Ruhestellung der Scheinwerferreinigungseinrichtung 4 befindet sich auch die Feder 9 in Ruhestellung. Die Feder 9 ist wie bereits beschrieben an einem Ende mit der Kolbenstange 6 verbunden und an ihrem anderen Ende an einem Druckkolben 10 befestigt. Dieser Druckkolben 10 erstreckt sich über den gesamten Durchmesser des Düsenzylinders 7 und ist solchermaßen auf der Kolbenstange 6 angeordnet, dass er auf dieser verschoben werden kann.

In der dargestellten Ruheposition befindet sich der Druckkolben 10 in Anlage mit dem der Düse 5 gegenüberliegenden Ende des Düsenzylinders 7. Der Düsenzylinder ist im Betrieb mit der Reinigungsflüssigkeit befüllt. Zu diesem Zweck ist der Düsenzylinder 7 über eine Leitung 11 mit einem nicht dargestellten Vorratsbehälter für Reinigungsflüssigkeit verbunden, wobei die Zufuhr der Reinigungsflüssigkeit in den Düsenzylinder 7 über ein Rückschlagventil 12 geregelt wird. Die Reinigungsflüssigkeit tritt durch eine Öffnung 13 in der Kolbenstange 6 in diese ein und gelangt so zur Düse 5. Um den Zeitpunkt des Reinigungsflüssigkeitsaustritts zu steuern, ist an der Düse ein Überdruckventil 14 vorgesehen, welches sich erst öffnet, wenn ein vorbestimmter Druck erreicht ist.

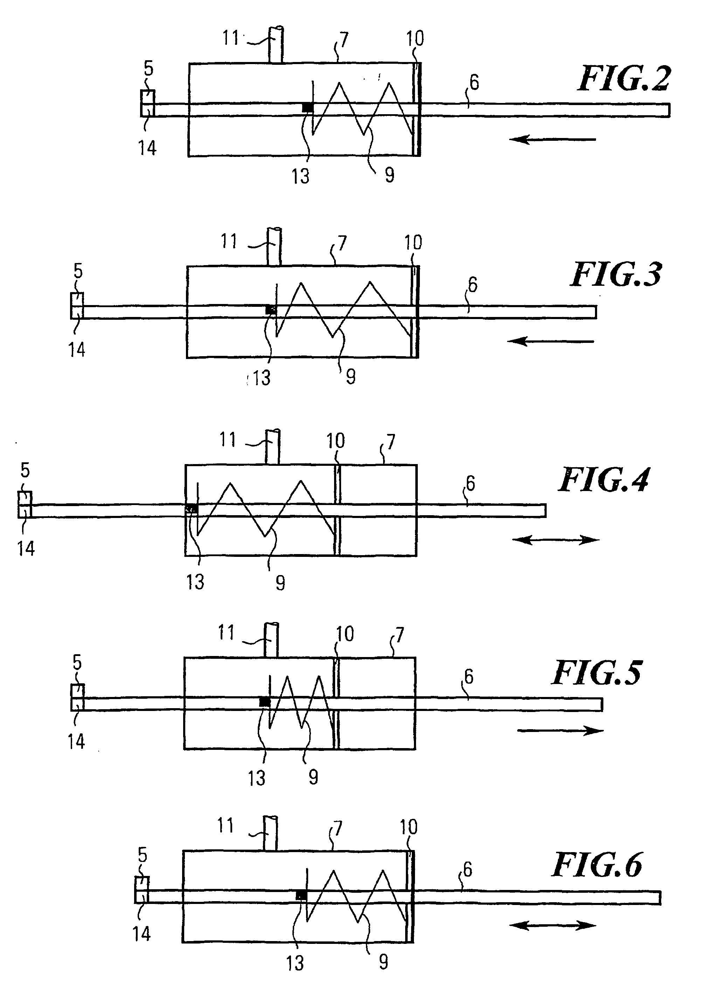

Das Funktionsprinzip der erfindungsgemäßen Scheinwerferreinigungseinrichtung gemäss einer bevorzugten Ausführungsform wird im folgenden anhand der Fig. 2- 6 näher erläutert.

Die in den Fig. 2- 6 dargestellte Scheinwerferreinigungseinrichtung 4 entspricht hierbei der in bezug auf Fig. 1 beschriebenen Einrichtung.

Fig. 2 zeigt entsprechend der Fig. 1 die Ruhestellung der erfindungsgemäßen Scheinwerferreinigungseinrichtung 4. Die als Rohr ausgebildete Kolbenstange 6 befindet sich im eingefahrenen Zustand. Die Feder 9 ist entspannt, eine weitere Kompression der Feder ist nicht möglich. Wie in Fig. 2 dargestellt, befindet sich der Druckkolben 10 an dem der Düse 5 abgewandten Ende des Düsenzylinders 7. Der gesamte Düsenzylinder 7 ist mit Reinigungsflüssigkeit befüllt. Das Überdruckventil 14 und das Rückschlagventil 12 sind geschlossen.

Wird die erfindungsgemäße Scheinwerferreinigungseinrichtung 4 betätigt, schaltet sich der Elektromotor 8 ein und bewegt die Kolbenstange 6 aus der Ruhestellung in Richtung der Arbeitsstellung. Das die Düse 5 tragende Ende der Kolbenstange 6 wird langsam ausgefahren. Mit zunehmendem Verfahrweg der Kolbenstange 6 spannt sich die an der Kolbenstange befestigte Feder 9, wie auch in Fig. 3 dargestellt.

Übersteigt die Federkraft die Kraft, die sich aus dem Wasserdruck mal Kolbenfläche ergibt, wird der Druckkolben 7 in Richtung Düse 5 von der Feder 9 mitgezogen, wie in Fig. 4 dargestellt. Diese Vorwärtsbewegung des Druckkolbens 10 beginnt folglich erst, nachdem die Düse 5 bereits eine vorbestimmte Strecke ausgefahren wurde. Da sich der Druckkolben 10 mit der Vorwärtsbewegung der Kolbenstange 6 kontinuierlich auf die der Düse 5 zugewandte Seite des Düsenzylinders 7 zu bewegt, wird der der Reinigungsflüssigkeit zur Verfügung stehende Raum innerhalb des Düsenzylinders verringert und kontinuierlich ein Wasserdruck aufgebaut. Wird ein vorbestimmter Druck erreicht, öffnet sich das Überdruckventil 14 und die Reinigungsflüssigkeit gelangt vom Düsenzylinder 7 über eine Öffnung 13 in die als Rohr ausgebildete Kolbenstange 6 und wird über die Düse 5 auf den Scheinwerfer gespritzt.
Die Öffnung 13 ist hierbei so angeordnet, dass sie sich in Ruhestellung ungefähr in der Mitte des Düsenzylinders befindet. Diese Position kann beliebig variiert werden, unter der Voraussetzung, dass sich die Öffnung 13 in der Arbeitsstellung noch innerhalb des Düsenzylinders 7 befindet.

Da die Düse zu dem Zeitpunkt, zu dem das Wasser herauszuspritzen beginnt, noch nicht die Arbeitsstellung erreicht hat, sondern sich noch in der Vorwärtsbewegung befindet, ist es möglich mit dem herausgespritzten Wasser eine größere Fläche des Scheinwerfers zu benetzen und so eine größere Reinigungswirkung zu erzielen.

Die Reinigungsflüssigkeit wird so lange aus der Düse 5 herausgespritzt, bis die Düse die Arbeitsstellung erreicht hat und sich ein Gleichgewicht zwischen der Federkraft und der Wasserdruckkraft eingestellt hat. Zu diesem Zeitpunkt schließt sich das Überdruckventil 14 wieder. Der Druckkolben 10 befindet sich auf der Kolbenstange 6 in einem mittleren Bereich des Düsenzylinders 7.

Ist der Reinigungsvorgang abgeschlossen, wird die Düse 5 wie in Fig 5 dargestellt, zusammen mit der Kolbenstange 6 durch Betätigen des Motors 8 wieder in Richtung der Ruhestellung eingefahren. Bei diesem Vorgang entspannt sich die Feder 9 zunächst und wird dann komprimiert, bis eine weitere Kompression der Feder nicht mehr möglich ist. Die kontinuierliche Einfahrbewegung der Kolbenstange 6 bewirkt zu diesem Zeitpunkt, dass der Druckkolben 10 über die Feder in den hinteren Bereich des Düsenzylinders verschoben wird. Durch die Verschiebung des Druckkolbens 10 entsteht in dem Düsenzylinder 7 ein Unterdruck. Ist ein bestimmter Unterdruck erreicht, öffnet sich das Rückschlagventil 12 und Reinigungsflüssigkeit wird von einem Vorratsbehälter über die Leitung 17 in den Düsenzylinder gesaugt.

Am Ende des Reinigungsvorganges, Fig. 6, ist die Kolbenstange 6 wieder vollständig eingefahren und befindet sich in der Ruhestellung. Der Druckkolben 10 befindet sich wieder am hinteren Anschlag im Düsenzylinder. Ferner ist der Düsenzylinder wieder vollständig mit Reinigungsflüssigkeit gefüllt.

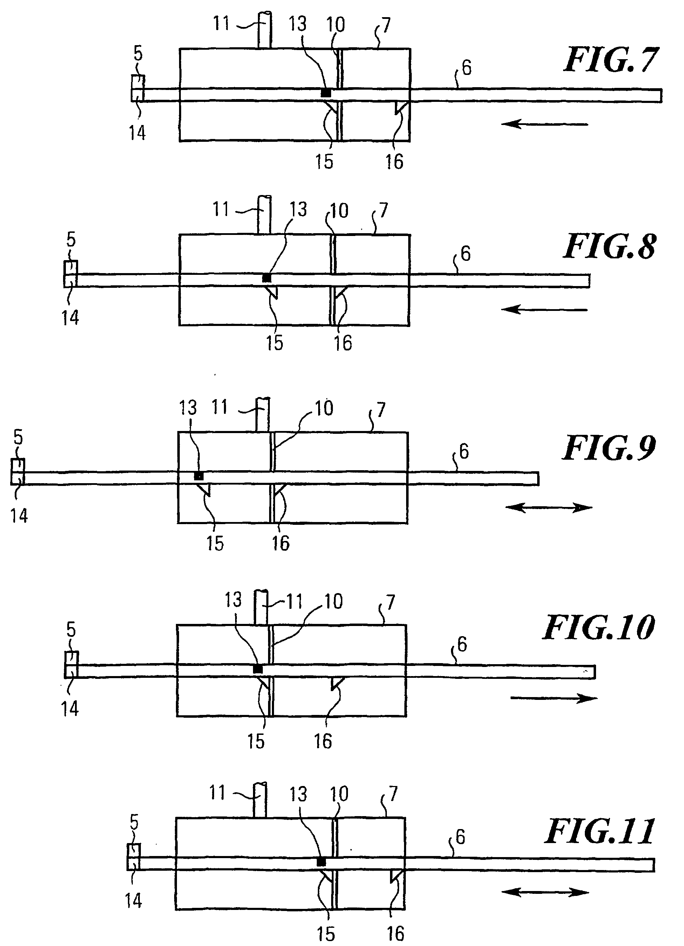

Fig. 7-11 zeigen das Funktionsprinzip der erfindungsgemäßen Scheinwerferreinigungseinrichtung gemäss einer anderen Ausführungsform. Hierbei werden gleiche Bauteile mit dem gleichen Bezugszeichen versehen. Ferner entsprechen die einzelnen Schritte den in den Fig. 2-6 dargestellten. im folgenden werden daher insbesondere die Unterschiede zu der vorhergehenden Ausführungsform beschrieben.

In Fig. 7 zeigt ist wiederum die erfindungsgemäße Scheinwerferreinigungseinrichtung 4. in Ruhestellung abgebildet. Der Aufbau des Düsenzylinders 7, sowie des Düsenträgers 6 und der Düse 5 entspricht der in den Fig. 2-6 dargestellten Ausführungsform. Im Gegensatz zu der ersten Ausführungsform weist der als Kolbenstange ausgebildete Düsenträger jedoch zwei Mitnehmeinrichtungen 15, 16 auf. In der dargestellten Ausführungsform sind diese Mitnehmeinrichtungen als keilförmige Vorsprünge ausgebildet, wobei jeder Vorsprung über eine sich senkrecht zu der Kolbenstange in der Düsenzylinder hinein erstreckende Fläche verfügt und wobei sich die senkrechten Flächen der Mitnehmeinrichtungen gegenüberliegen. Diese Mitnehmeinrichtungen können einstückig mit der Kolbenstange ausgebildet werden oder mittels bekannter Maßnahmen auf der Kolbenstange befestigt werden. Die erste Mitnehmeinrichtung 15 ist hierbei im hinteren Bereich des Düsenzylinders 7 auf der Kolbenstange 6 angeordnet, so dass sich ungefähr zwei Drittel der Kolbenstange zur Düse hin erstrecken und ein Drittel zu dem der Düse abgewandten Ende. Die zweite Mitnehmeinrichtung 16 befindet sich an dem der Düse 5 gegenüberliegenden Ende des Düsenzylinders 7. Die Positionen der Mitnehmeinrichtungen können jedoch wenn erfordert variiert werden.

In der in Fig. 7 dargestellten Ruhestellung befindet sich der Druckkolben 10 in Anlage zu der ersten Mitnehmeinrichtung 15, d.h. der Druckkolben liegt an der senkrechten Fläche der ersten Mitnehmeinrichtung an.

Wird die Scheinwerferreinigungseinrichtung betätigt, wird die Kolbenstange 6, angetrieben von dem Elektromotor langsam in die Arbeitsstellung ausgefahren.

Diese Bewegung bewirkt, dass sich die erste Mitnehmeinrichtung 15 von dem Druckkolben 10 entfernt und sich gleichzeitig die zweite Mitnehmeinrichtung 16 auf den Druckkolben 10 zu bewegt, bis dieser schließlich an der zweiten Mitnehmeinrichtung 16 anliegt, wie in Fig. 8 gezeigt. Bei dieser Ausführungsform ist der zwischen dem Druckkolben 10 und dem der Düse 5 zugewandten Ende des Düsenzylinders entstehende Raum mit der Reinigungsflüssigkeit befüllt.

Die weitere Vorwärtsbewegung der Kolbenstange führt dazu, dass der Druckkolben von der zweiten Mitnehmeinrichtung 16 mitbewegt wird. Durch diese Bewegung verringert sich der Raum zwischen dem der Düse zugewandten Ende des Düsenzylinders 7 und dem Druckkolben 10, so dass sich der Wasserdruck in diesem Raum erhöht, vergleiche Fig. 9. Bei Erreichen eines bestimmten Druck öffnet sich auf schon beschriebene Weise das Überdruckventil und die Reinigungsflüssigkeit spritzt aus der Düse 5.

Ist der Spritzvorgang beendet, wird die Kolbenstange aus der Arbeitsstellung wieder in die Ruhestellung bewegt. Bei diesem Vorgang entfernt sich die zweite Mitnehmeinrichtung von dem Druckkolben 10, der zunächstln seiner Endposition stehen bleibt, bis sich der Druckkolben wiederum in Anlage zu der ersten Mitnehmeinrichtung 15 befindet, wie in Fig. 10 dargestellt.

Der Druckkolben wird von der ersten Mitnehmeinrichtung in die Ausgangsposition, d.h. die Position der Ruhestellung zurückgeführt. Durch die Vergrößerung des Raumes zwischen dem der Düse zugewandten Ende des Düsenzylinders 7 und dem Druckkolben 10 entsteht ein Unterdruck in diesem Raum, das Rückschlagventil 13 öffnet sich und der Raum wird wieder mit Reinigungsflüssigkeit gefüllt, so dass zu dem Zeitpunkt zu dem der Motor abgestellt wird, Fig. 11, die Ruhestellung, bzw. der Ausgangszustand wieder erreicht ist.

## Patentansprüche

1. Scheinwerferreinigungseinrichtung (4) für Fahrzeuge mit einer an einem Düsenträger (6) angeordneten Düse (5), wobei der Düsenträger (6) als Stange ausgebildet ist und mittels eines Stellantriebs (8), insbesondere eines Elektromotors, zwischen einer eingefahrenen Ruhestellung und einer ausgefahrenen Arbeitsstellung bewegbar ist, in der die Düse (5) auf den Scheinwerfer gerichtet ist, wobei ein mit Reinigungsflüssigkeit befüllbarer Düsenzylinder (7) und ein in dem Düsenzylinder (7) angeordneter Druckkolben (10), welcher auf dem als Kolbenstange ausgebildeten Düsenträger (6) angeordnet ist , **dadurch gekennzeichnet, dass** der Druckkolben (10) gegenüber dem Düsenträger (6) streckenweise axial verschiebbar ist.

2. Scheinwerferreinigungseinrichtung (4) nach Anspruch 1, **dadurch gekennzeichnet, dass** sich der Düsenträger (6) endseitig durch den Düsenzylinder (7) erstreckt, wobei der Druckkolben (10) in Ruhestellung auf dem Düsenträger (6) in dem von der Düse (5) abgewandten Bereich des Düsenzylinders (7) und in Arbeitsstellung in dem mittleren Bereich des Düsenzylinders (7) angeordnet ist.

3. Scheinwerferreinigungseinrichtung (4) nach Anspruch 2, **dadurch gekennzeichnet, dass** sich der Druckkolben (10) in Ruhestellung an dem von der Düse (5) abgewandten Ende des Düsenzylinders (7) befindet.

4. Scheinwerferreinigungseinrichtung (4) nach einem der Ansprüche 1 bis 3, **dadurch gekennzeichnet, dass** während der Ausfahrbewegung des Düsenträgers (6) durch gleichzeitige Bewegung des Druckkolbens (10) ein Überdruck in dem Düsenzylinder (7) und während der Einfahrbewegung des Düsenträgers (6) durch gleichzeitige Bewegung des Druckkolbens (10) ein Unterdruck in dem Düsenzylinder (7) entsteht.

5. Scheinwerferreinigungseinrichtung (4) nach einem der Ansprüche 1 bis 4, **dadurch gekennzeichnet, dass** die Vorwärtsbewegung des Druckkolbens (10) zeitverzögert zu der Bewegung des Düsenträgers (6) erfolgt.

6. Scheinwerferreinigungseinrichtung (4) nach Anspruch 5, **dadurch gekennzeichnet, dass** die Zeitverzögerung durch Vermittlung einer Feder (9) erfolgt, welche an ihrem einem Ende mit dem Düsenträger (6) und an ihrem anderen Ende mit dem Druckkolben (10) so verbunden ist, dass sich mit der Bewegung des Düsenträgers (6) die Feder (9) spannt und die gespannte Feder (9) erst nach Erreichen eines bestimmten Weges den Druckkolben (10) mitzieht.

7. Scheinwerferreinigungseinrichtung (4) nach Anspruch 6, **dadurch gekennzeichnet, dass** die Feder (9) in einer Richtung als Druck- und in der anderen Richtung als Zugfeder ausgebildet ist, wobei sich die Feder (9) in der Ruhestellung in der neutralen Mittelstellung befindet.

8. Scheinwerferreinigungseinrichtung (4) nach Anspruch 5, **dadurch gekennzeichnet, dass** die Zeitverzögerung durch zwei Mitnehmeinrichtungen (15, 16) bewirkt wird, welche auf dem Düsenträger (6) innerhalb des Düsenzylinders (7) solchermaßen angeordnet sind, dass der Druckkolben (10) in der Ruhestellung an einer ersten Mitnehmeinrichtung (15) angeordnet ist, die sich in einem mittleren Bereich des Düsenträgers (6) befindet und wobei eine zweite Mitnehmeinrichtung (16) an dem der Düse (5) abgewandten Ende des Düsenzylinders (7) angeordnet ist, die den Druckkolben (10) nach Erreichen eines vorbestimmten Weges mitzieht.

9. Scheinwerferreinigungseinrichtung (4) nach Anspruch 8, **dadurch gekennzeichnet, dass** die Mitnehmeinrichtungen (15, 16) als Vorsprünge an dem Düsenträger (6) ausgebildet sind.

10. Scheinwerferreinigungseinrichtung (4) nach einem der Ansprüche 1 bis 9, **dadurch gekennzeichnet, dass** der Düsenzylinder (7) mit einem Vorratsbehälter für Reinigungsflüssigkeit verbunden ist.

11. Scheinwerferreinigungseinrichtung (4) nach Anspruch 10, **dadurch gekennzeichnet, dass** zwischen dem Vorratsbehälter und dem Düsenzylinder (7) ein Rückschlagventil (12) angeordnet ist.

12. Scheinwerferreinigungseinrichtung (4) nach einem der Ansprüche 1 bis 11, **dadurch gekennzeichnet, dass** die Düse (5) mit einem Überdruckventil (14) versehen ist.

13. Scheinwerferreinigungseiririchtung (4) nach einem der Ansprüche 1 bis 12, **dadurch gekennzeichnet, dass** der Düsenträger (6) als Rohr ausgebildet ist und in dem innerhalb des Düsenzylinders (7) angeordneten Bereich eine Öffnung (13) aufweist, durch welche Reinigungsflüssigkeit aus dem Düsenzylinder (7) durch den Düsenträger (6) zu der Düse (5) geleitet wird.

## Claims

1. Headlight cleaning device (4) for vehicles, having a nozzle (5) which is arranged on a nozzle carrier (6), the nozzle carrier (6) being designed as a rod and being moveable by means of an actuator (8), in particular an electric motor, between a retractive inoperative position and an extending working position, in which the nozzle (5) is directed at the headlight, a nozzle cylinder (7) which can be filled with cleaning fluid and a pressure piston (10) which is arranged in the nozzle cylinder (7) and is arranged on the nozzle carrier (6), which is designed as piston rod, **characterized in that** the pressure piston (10) can be displaced axially in relation to the nozzle carrier (6) by stretching.

2. Headlight cleaning device (4) according to Claim 1, **characterized in that** the nozzle carrier (6) extends on the end side through the nozzle cylinder (7), the pressure piston (10), in the inoperative position, being arranged on the nozzle carrier (6) **in that** region of the nozzle cylinder (7) which faces away from the nozzle (5) and, in the working position, being arranged in the central region of the nozzle cylinder (7).

3. Headlight cleaning device (4) according to Claim 2, **characterized in that** the pressure piston (10), in the inoperative position, is situated at that end of the nozzle cylinder (7) which faces away from the nozzle (5).

4. Headlight cleaning device (4) according to one of Claims 1 to 3, **characterized in that**, during the extension movement of the nozzle carrier (6), a simultaneous movement of the pressure piston (10) causes a positive pressure to arise in the nozzle cylinder (7) and, during the retraction movement of the nozzle carrier (6), a simultaneous movement of the pressure piston (10) causes a negative pressure to arise in the nozzle cylinder (7).

5. Headlight cleaning device (4) according to one of Claims 1 to 4, **characterized in that** the forwards movement of the pressure piston (10) takes place with a time delay in relation to the movement of the nozzle carrier (6).

6. Headlight cleaning device (4) according to Claim 5, **characterized in that** the time delay takes place by the arrangement of a spring (9) which is connected at its one end to the nozzle carrier (6) and at its other end to the pressure piston (10) in such a manner that, with the movement of the nozzle carrier (6), the spring (9) is tensioned and, only after a certain distance is reached, does the tensioned spring (9) draw along the pressure piston (10).

7. Headlight cleaning device (4) according to Claim 6, **characterized in that** the spring (9) is designed in one direction as a compression spring and in the other direction as a tension spring, the spring (9), in the inoperative position, being situated in the neutral central position.

8. Headlight cleaning device (4) according to Claim 5, **characterized in that** the time delay is brought about by two driving devices (15, 16) which are arranged on the nozzle carrier (6) within the nozzle cylinder (7) in such a manner that the pressure piston (10), in the inoperative position, is arranged on a first driving device (15) which is situated in a central region of the nozzle carrier (6), and a second driving device (16) being arranged at that end of the nozzle cylinder (7) which faces away from the nozzle (5), the second driving device drawing along the pressure piston (10) after reaching a predetermined distance.

9. Headlight cleaning device (4) according to Claim 8, **characterized in that** the driving devices (15, 16) are designed as projections on the nozzle carrier (6).

10. Headlight cleaning device (4) according to one of Claims 1 to 9, **characterized in that** the nozzle cylinder (7) is connected to a storage container for cleaning fluid.

11. Headlight cleaning device (4) according to Claim 10, **characterized in that** a nonreturn valve (12) is arranged between the storage container and the nozzle cylinder (7).

12. Headlight cleaning device (4) according to one of Claims 1 to 11, **characterized in that** the nozzle (5) is provided with a pressure control valve (14).

13. Headlight cleaning device (4) according to one of Claims 1 to 12, **characterized in that** the nozzle carrier (6) is designed as a tube and in the region arranged within the nozzle cylinder (7) has an opening (13) through which cleaning fluid is conducted out of the nozzle cylinder (7) through the nozzle carrier (6) to the nozzle (5).

## Revendications

1. Dispositif de nettoyage de phare (4) pour véhicules comprenant un gicleur (5) disposé sur un support de gicleur (6), le support de gicleur (6) étant réalisé sous forme de tige et pouvant être déplacé au moyen d'un actionneur (8), notamment d'un moteur électrique, entre une position de repos rentrée et une position de travail sortie dans laquelle le gicleur (5) est dirigé vers le phare, un cylindre de gicleur (7) pouvant être rempli de liquide de nettoyage et un piston de compression (10) disposé dans le cylindre de gicleur (7), qui est disposé sur le support de gicleur (6) réalisé sous forme de tige de piston **caractérisé en ce que** le piston de compression (10) peut être déplacé axialement par portions par rapport au support de gicleur (6).

2. Dispositif de nettoyage de phare (4) selon la revendication 1, **caractérisé en ce que** le support de gicleur (6) s'étend du côté de son extrémité à travers le cylindre de gicleur (7), le piston de compression (10) étant disposé dans la position de repos sur le support de gicleur (6) dans la région du cylindre de gicleur (7) opposée au gicleur (5) et dans la position de travail dans la région centrale du cylindre de gicleur (7).

3. Dispositif de nettoyage de phare (4) selon la revendication 2, **caractérisé en ce que** le piston de compression (10) se trouve dans la position de repos au niveau de l'extrémité du cylindre de gicleur (7) opposée au gicleur (5).

4. Dispositif de nettoyage de phare (4) selon l'une quelconque des revendications 1 à 3, **caractérisé en ce que** pendant le mouvement de sortie du support de gicleur (6) par mouvement simultané du piston de compression (10), il se produit une surpression dans le cylindre de gicleur (7) et pendant le mouvement de rentrée du support de gicleur (6) par mouvement simultané du piston de compression (10) il se produit une dépression dans le cylindre de gicleur (7).

5. Dispositif de nettoyage de phare (4) selon l'une quelconque des revendications 1 à 4, **caractérisé en ce que** le mouvement vers l'avant du piston de compression (10) s'effectue avec un retard dans le temps par rapport au mouvement du support de gicleur (6).

6. Dispositif de nettoyage de phare (4) selon la revendication 5, **caractérisé en ce que** le retard dans le temps s'effectue par l'intermédiaire d'un ressort (9) qui est connecté à l'une de ses extrémités au support de gicleur (6) et à son autre extrémité au piston de compression (10) de telle sorte que le ressort (9) se tende avec le mouvement du support de gicleur (6) et que le ressort tendu (9) entraîne avec lui le piston de compression (10) seulement après avoir atteint une distance déterminée.

7. Dispositif de nettoyage de phare (4) selon la revendication 6, **caractérisé en ce que** le ressort (9) est réalisé dans une direction en tant que ressort de compression et dans l'autre direction en tant que ressort de traction, le ressort (9) se trouvant dans la position de repos dans la position centrale neutre.

8. Dispositif de nettoyage de phare (4) selon la revendication 5, **caractérisé en ce que** le retard dans le temps est effectué par deux dispositifs d'entraînement (15, 16) qui sont disposés sur le support de gicleur (6) à l'intérieur du cylindre de gicleur (7) de telle sorte que le piston de compression (10) soit disposé dans la position de repos contre un premier dispositif d'entraînement (15) qui se trouve dans une région centrale du support de gicleur (6) et où un deuxième dispositif d'entraînement (16) est disposé au niveau de l'extrémité du cylindre de gicleur (7) opposée au gicleur (5), lequel entraîne avec lui le piston de compression (10) après avoir atteint une distance prédéterminée.

9. Dispositif de nettoyage de phare (4) selon la revendication 8, **caractérisé en ce que** les dispositifs d'entraînement (15, 16) sont réalisés en tant que saillies sur le support de gicleur (6).

10. Dispositif de nettoyage de phare (4) selon l'une quelconque des revendications 1 à 9, **caractérisé en ce que** le cylindre de gicleur (7) est connecté à un réservoir de liquide de nettoyage.

11. Dispositif de nettoyage de phare (4) selon la revendication 10, **caractérisé en ce que** l'on dispose entre le réservoir et le cylindre de gicleur (7) une soupape de non retour (12).

12. Dispositif de nettoyage de phare (4) selon l'une quelconque des revendications 1 à 11, **caractérisé en ce que** le gicleur (5) est pourvu d'une soupape de surpression (14).

13. Dispositif de nettoyage de phare (4) selon l'une quelconque des revendications 1 à 12, **caractérisé en ce que** le support de gicleur (6) est réalisé sous forme de tube et présente, dans la région disposée à l'intérieur du cylindre de gicleur (7), une ouverture (13) à travers laquelle le liquide de nettoyage est conduit hors du cylindre de gicleur (7) à travers le support de gicleur (6) jusqu'au gicleur (5).
